Europäisches Patentamt

European Patent Office

Office européen des brevets

(11) Publication number: **0 349 497**
**A2**

# EUROPEAN PATENT APPLICATION

(21) Application number: **89830288.0**

(51) Int. Cl.⁵: **F 16 D 65/04**

(22) Date of filing: **22.06.89**

(30) Priority: **27.06.88 IT 54688**

(43) Date of publication of application:
**03.01.90 Bulletin 90/01**

(84) Designated Contracting States:
**AT BE CH DE ES FR GB GR LI LU NL SE**

(71) Applicant: **E. BORA S.r.l.**
**Via dell'Industria, 3**
**I-60030 Moie di Maiolati Spontini (AN) (IT)**

(72) Inventor: **Bora, Elio**
**Via Magini Coletti 12**
**I-60035 Jesi (AN) (IT)**

(74) Representative: **Baldi, Claudio**
**Piazza Ghislieri, 3**
**I-60035 Jesi (Ancona) (IT)**

(54) **Shoe for drum brakes, fitted with brake lining-holder belt fixed by calking outside the supporting and stiffening plate.**

(57) This invention relates to a brake shoe for drum brakes wherein the curved sheet plate belt, covered externally by a layer of friction material is fixed on the edge of its internal supporting plate, not by means of traditional welding spots but by means of radial teeth fitted along the edge of the above supporting plate, which are fitted and calked into corresponding slots made along the median longitudinal axis of the above sheet plate belt.

FIG. 1

EP 0 349 497 A2

## Description

### Brake Shoe for Drum Brakes wherein the Lining-Holder Belt is Fixed by Calking Outside the Supporting and Stiffening Plate

This patent application for an industrial utility model concerns a brake shoe for drum brakes, consisting of a traditional curved sheet plate belt, and covered externally with friction material, such as brake lining, and supported by an internal scythe-shaped plate resting on a vertical plane passing through the median longitudinal axis of the above belt.

The particular characteristic of the brake shoe according to the invention involves the technical solution adopted for fixing the two above components, which are currently connected with a series of welded spots, while in the model according to the invention these parts are fixed by means of several radial teeth, along the external curved profile of the supporting plate, which fit into the corresponding slots along the median axis of the above curved belt, in that these teeth are then calked, so that they can not be removed from the housing slots.

The aim of the invention is in fact to offer a new solution for fixing the above two supporting components of a standard brake shoe for drum brakes, which makes it possible to considerably reduce the production costs currently required for the connection in question, which is presently always carried out by welding.

For major clarity the description of the invention continues with reference to the enclosed drawings, which are intended for illustrative purposes and not in a limiting sense in which:

- fig 1 is an axonometric view of the brake shoe according to the invention.

- fig. 2 is a plan view of the brake shoe according to the invention in which the curved belt for supporting the friction material, is sectioned in several brief portions with a median longitudinal plane.

With reference to the above figures, the brake shoe according to the invention consists of a traditional curved sheet plate belt (1), covered externally by a layer of friction material.

This belt (1) is supported and stiffened by a suitably shaped plate (2) having a curved external profile which matches the curved profile of the belt (1) perfectly, in that this plate must be fixed on the internal face of the belt (1) in a median position and edgewise, resting on a vertical plane passing through the longitudinal axis of the belt (1).

In fact, for a perfect coupling between the plate (2) and the belt (1), the latter is curved by means of a bending jig (4), pressing it against the external edge of the plate (2) which is firmly fixed so that the curve of the belt (1) follows the external profile of the plate (2), perfectly.

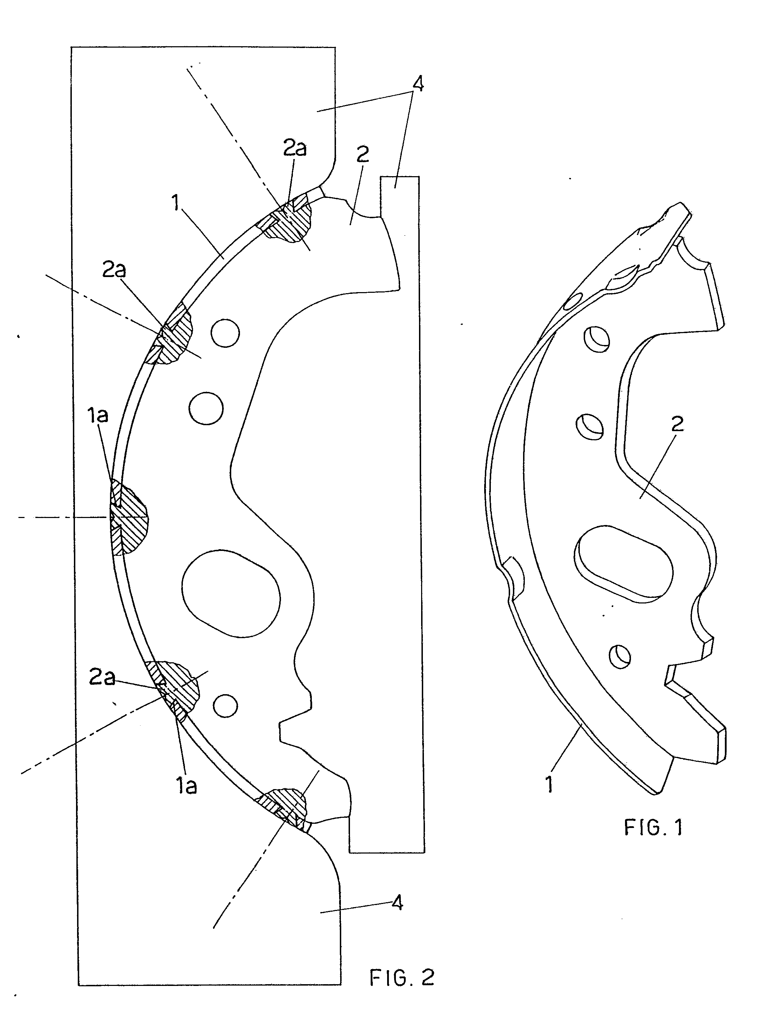

As illustrated in fig. 2, the supporting and stiffening plate (2) has several radial teeth (2a) along its external edge, spaced at regular intervals, which fit into the same number of corresponding and matching slots (1a) along the median axis of the belt (1).

These radial teeth (2a) are in fact fitted automatically into the corresponding slots (1a) at the end of the above die-bending operation for shaping the belt (1), directly on the external edge of the plate (2).

Immediately after this operation has been completed, the teeth (2a) are calked, so as to remain stably and permanently fixed in the respective slots (1a) which are slightly tapered in that they have a decreasing section from the outside to the inside, so that once the teeth (2a) have been calked, it is almost impossible to remove them. Obviously this calking operation is much cheaper than the spot welding currently used for fixing the belt (1) and the plate (2).

## Claims

1) A brake shoe for drum brakes, wherein the lining-holder belt is fixed by calking outside its supporting and stiffening plate, consisting of a curved belt (1) and a supporting and stiffening plate (2) fitted inside this belt (1) in a median position and edgewise, characterized in that this plate (2) has several radial teeth (2a) along its external curved profile, which are first fitted then calked into the respective and matching slots (1a), along the longitudinal median axis of the belt (1).

2) A brake shoe for drum brake wherein the lining-holder belt is fixed by calking outside to its supporting and stiffening plate according to claim 1, characterized in that the slots (1a) have a decreasing section from outside to inside.

EP 0 349 497 A2

FIG. 1

FIG. 2